# EUROPÄISCHE PATENTSCHRIFT

(11) **EP 2 160 072 B1**
(45) Veröffentlichungstag und Bekanntmachung des Hinweises auf die Patenterteilung: **07.05.2014**
(21) Anmeldenummer: 09156689.3
(22) Anmeldetag: 30.03.2009
(51) Int. Cl.: H05B 3/14, B60N 2/56

(54) **Streckgerissene Carbonfasergarne für eine Heizvorrichtung**
Stretch broken carbon fibre thread for a heating device
Fils en fibre de carbone à étirement partiel pour un dispositif de chauffage

(30) Priorität: 27.08.2008 DE 102008039840
(43) Veröffentlichungstag der Anmeldung: 03.03.2010
(73) Patentinhaber: SGL Carbon SE, 65201 Wiesbaden (DE)
(72) Erfinder: Bode, Reiner, 86447 Aindling (DE)

(56) Entgegenhaltungen:
- DE-U1- 20 014 518
- FR-A1- 2 263 658
- US-A- 3 367 851
- US-B1- 6 649 886

## Beschreibung

Die Erfindung betrifft eine Heizvorrichtung nach dem Oberbegriff des Anspruchs 1.

Heizelemente haben viele Anwendungen in Haushaltsgeräten, zu Bauzwecken oder in industriellen Verfahren. Ihre physikalischen Eigenschaften, wie zum Beispiel Dicke, Form, Größe, Festigkeit, Flexibilität und andere Eigenschaften beeinflussen ihre Verwendbarkeit in einer Vielzahl von Anwendungsbereichen.

Ein Verfahren zur Garnherstellung aus Kohlenstofffasern ist aus EP 0274970 B1 bekannt. Mit einem Spaltverfahren durch Strecken und kontrollierten Bruch werden Kabel aus Kohlenstoffmultifilamenten verarbeitet, um Fasern zu erhalten, die auf einer klassischen Spinnmaschine zu Garnen umgesetzt werden.

Aus DE 29924210 U1 sind elektrische Heizelemente bekannt, welche einen weichen und festen, Metall oder Kohlenstoff enthaltenden, elektrisch leitfähigen Kern und Fäden/Fasern aufweisen. Die mäanderförmigen Heizelemente bestehen aus einem C-Faser-Gewebe vorgegebener Form, das mit einem weichen Material, wie Stärke gefüllt ist, elektrischen Kontaktstücken und auf beiden Oberflächen aufgelegten elektrisch isolierenden Folien.

In der DE 4233118 A1 werden Heizmatten beschrieben, welche aus einem elektrisch leitenden flexiblen Widerstandsdraht auf Kohlenstoffbasis bestehen. Der flexible Widerstandsdraht besteht dabei aus einem aus Kohlenstofffasern gebildeten Gewebe, in das flexible Kontaktdrähte, welche die Elektroden darstellen, eingearbeitet sind. Das Gewebe weist einen relativ hohen elektrischen Widerstand auf und erwärmt sich aufgrund dieses elektrischen Widerstandes bei Stromdurchfluss.

In der DE102005050459 B3 wird ein flexibles Flächenheizelement beschrieben, insbesondere für Sitzheizungen, mit einem Heizfeld aus leitfähigen Fasern, die mit mindestens einer Kontaktleiste elektrisch leitend verbunden sind, das dadurch gekennzeichnet ist, dass die mindestens eine Kontaktleiste einen Anteil an Leitern in Form von Stahlfilamenten und einen Anteil an Leitern in Form von Filamenten einer höheren Leitfähigkeit als die der Stahlfilamente enthält.

In der W09855340A1 wird eine Sitzklimatisierungsvorrichtung beschrieben, die einen unter einer Sitzfläche angeordneten luftdurchlässigen Grundkörper aufweist und ein in dem Grundkörper oder zwischen der Sitzfläche und dem Grundkörper angeordnetes Heizelement. Das Heizelement besteht aus einem Carbonmultifilament oder aus einem Carbonfaser-Mischgarn.

Aus DE 200 14 518 U ist ein Karbonfaser-Band bekannt, das 200 tex Kohlfasern enthält.

Insbesondere in Heizungen für Autositze werden 1 K und 3K CF-Rovings eingesetzt, die sehr teuer und nicht in ausreichender Masse lieferbar sind. Bei Rovings >3K ist hingegen der elektrische Widerstand zu gering. CF steht dabei für Carbonfaser; Rovings sind Bündel von endlosen, unverdrehten, gestreckten Fasern und K steht für 1000 Filamente.

Aufgabe der vorliegenden Erfindung ist es, eine alternative Heizvorrichtung auf Basis eines elektrisch leitenden, flexiblen Widerstandsmaterials aus Carbonfasern bereitzustellen, die die Nachteile des Standes der Technik überwindet und wobei das Widerstandsmaterial zwischen mindestens zwei Elektroden für die elektrische Kontaktierung angeordnet ist.

Diese Aufgabe wird gelöst durch eine Heizvorrichtung nach Anspruch 1.

Gegenstand der Erfindung ist eine Heizvorrichtung auf Basis eines elektrisch leitenden, flexiblen Widerstandsmaterials aus Carbonfasern. Die Heizvorrichtung ist zwischen zwei Elektroden für die elektrische Kontaktierung angeordnet. Bei den erfindungsgemäßen Carbonfasern handelt es sich um streckgerissene Carbonfasergarne mit einem Titer von 30tex bis 800tex und einem spezifischen, elektrischen Widerstand von 100 bis 600 Ω/m.

Besonders bevorzugt werden die streckgerichteten Carbonfasern mit einer Schlichte behandelt. Die Schlichte ist eine Tinktur, die entweder aus Stärke oder Zellulose besteht. Mit der erfindungsgemäßen Schlichte wird die Glätte, Reißfestigkeit und Gleitfähigkeit der streckgerichteten Carbonfaser erhöht.

Gemäß der vorliegenden Erfindung kann beispielsweise aus einem kostengünstigen 45K oder 50K Roving durch ein Streck-Reiss-Spinnverfahren ein Stapelfasergarn hergestellt werden, das im Titer einem 1 K- oder 3-K Endlosroving entspricht. Die
streckgerissenen Carbonfasergarne zeigen in vorteilhafter Weise geringe Schwankungen der elektrischen Widerstände.

Überraschend haben die streckgerissenen Carbonfasergarne eine besonders hohe Bruchdehnung, was beispielsweise den Sitzkomfort in Kraftfahrzeugen erhöht.

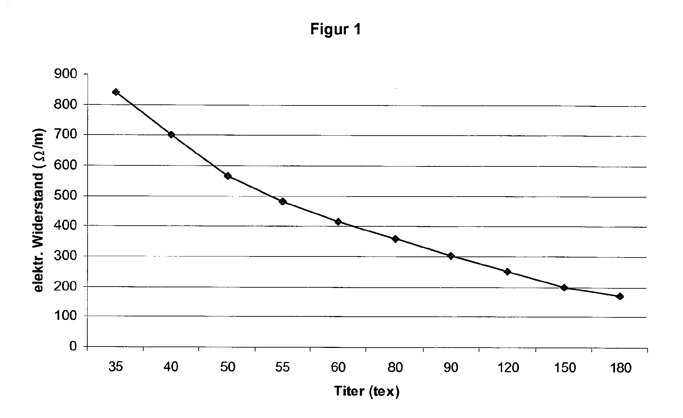

Die streckgerissenen Garne können auch in "Zwischentitern" hergestellt werden, wobei der elektrische Widerstand über den Garntiter besonders bevorzugt individuell eingestellt werden kann (siehe Figur 1). Beispielsweise erkennt man bei 120 tex (1,8K) in Figur 1, dass der elektrische Widerstand der in Titern hergestellten streckgerissenen Garne bei 170 Ω/m eingestellt werden kann. Die erfindungsgemäßen streckgerissenen Carbonfasergarne bieten erhebliche Kostenvorteile gegenüber den herkömmlichen 1 K- oder 3K- Endlosrovingen. Die streckgerissenen Carbonfasergarne entsprechen beispielsweise im Titer in etwa einem 1 K- oder 3K-Endlosroving.

Die streckgerissenen Carbonfasergarne sind besonders bevorzugt mit einem textilen Trägermaterial verbunden. Bei dem Trägermaterial handelt es sich um ein textiles Kunstfaserträgermaterial oder artverwandte Materialien, wie zum Beispiel Baumwolle, mit in das Trägermaterial eingewebten Kontaktstreifen und Heizleitern.

Es kann zweckmäßig sein, dass die Heizschicht ein Carbonfaser-Vlies oder ein Textil mit aufgenähten Carbonfäden aufweist, wobei jeweils streckgerissene Carbonfasergarne verwendet werden. Diese Materialien sind einfach zu handhaben und besitzen eine homogene Widerstandsverteilung.

Es kann ein Polsterelement entstehen, das beispielsweise ein Formschaumelement mit elastischer oder auch relativ formsteifer Struktur umfasst. Die Form der Heizfläche ist dabei variabel. Sie kann in der äußeren Erscheinung etwa eckig, rund oder gewölbt sein. Die Funktion sowie die Flächenheizleistungsdichte ist wegen der textilen Struktur des Heizelementes in keinem Fall beeinträchtigt. Sie ist sowohl eckig als auch rund und ebenfalls in gewölbtem oder geknicktem Zustand funktionsfähig. Eine Beeinträchtigung kommt allenfalls dann in Betracht, wenn durch Schnitt, Riss oder Bruch der Kontaktleiter völlig durchtrennt ist.

Das Polsterelement kann grundsätzlich jedes denkbare Interieurteil im Fahrzeug sein, das auf die beschriebene Weise mit einer Heizvorrichtung versehen werden kann. Besonders bevorzugt ist die Heizvorrichtung Bestandteil eines Sitzpolsters oder Lehnenpolsters oder Wangenpolster eines Fahrzeugsitzes. Die Heizvorrichtung ist vorzugsweise auch zur Beheizung von anderen Polsterteilen einer Fahrzeuginnenausstattung wie beispielsweise einer Türinnenverkleidung geeignet.

Vorzugsweise besitzt die Heizvorrichtung eine Steuerungs- und eine Regelungseinrichtung. Dazu gehören auch optische Einrichtungen wie beispielsweise ein oder mehrere LEDs oder OLEDs.

Es ist weiter bevorzugt, dass die Heizvorrichtung einen Temperatursensor besitzt. Alternativ können auch Temperatur-Selbstbegrenzungseigenschaften bereitgestellt werden.

Bevorzugt wird die Heizvorrichtung im Temperaturbereich von 20 bis 35°C als Sitzheizung für Fahrzeuge, besonders bevorzugt als Sitzheizung für Kraftfahrzeuge, verwendet.

Es ist weiter bevorzugt, dass die Sitzheizung im Temperaturbereich von 5 bis 45°C als medizinischer Verband verwendet wird.

Ferner wird die Sitzheizung im Temperaturbereich von 45 bis 400°C vorzugsweise als Formenheizung für Polymer-Faser-Verbundbauteile verwendet.

Weiterhin kann die Heizvorrichtung verwendet werden (ohne dass dies eine Beschränkung darstellen soll):
(a) in Form von Heizkabeln für Flüssigkeiten aller Art, beispielsweise für die Temperierung von Aquarien, wobei eine Thermostatsteuerung ergänzt werden kann;
(b) für elektrisch beheizte Decken, Polster, Matratzen, Leintücher und Teppiche;
(c) für Wände, Büroteilerwände, in den Lamellen von Jalousien, Ventilatorblättern, Möbeln, in elektrische Decken oder Bodenheizvorrichtungen;
(d) für Heizvorrichtungen in den Sitzen von Autos, Mopeds, Motorrädern, Booten und Flugzeugen;
(e) für elektrisch beheizte Schwimmwesten, Kleider, Stiefel, Handschuhe, Hüte und Tauchanzüge;
(f) für Behältnisse zum Transportieren von Lebensmitteln und Schlafsäcken;
(g) für Enteisungssysteme für Kühlschränke, Straßen, Dächer und die Propeller von Flugzeugen oder Hubschraubern;
(h) für elektrische Heizvorrichtungen für Rohrleitungen, Trommeln und Tanks,
(i) in Zündvorrichtungen für elektrische Brenner, sowie diverse weitere Anwendungen bei Rohrheizern, Antennen und Elektrofiltern sowie als Heizschlauch für Durchlauferhitzer.

Es kann zweckmäßig sein, dass die elektrische Leitfähigkeit der Heizschicht lokal reduziert wird. Dies gestattet eine differenzierte Temperatureinstellung.

Als Materialien für die Heizschicht kommen beispielsweise elektrisch leitfähige oder leitfähig beschichtete Folien, Gewirke, Gewebe oder Vliese in Frage. Als elektronische Leiter sind dabei insbesondere streckgerissene Carbonfasergarne geeignet.

Die Heizvorrichtung ist aus Sicherheitsgründen und physiologischen Aspekten für Gleichspannung bzw. Niedrigspannung konzipiert. Es ist jedoch auch ein Betrieb mit Wechselspannung denkbar.

## Patentansprüche

1. Heizvorrichtung auf Basis eines elektrisch leitenden, flexiblen Widerstandsmaterials aus Carbonfasern angeordnet zwischen mindestens zwei Elektroden für die elektrische Kontaktierung, **dadurch gekennzeichnet, dass** die Carbonfasern streckgerissene Carbonfasergarne mit einem Titer von 30tex bis 800tex und einem spezifischen, elektrischen Widerstand von 100 bis 600 Ω/m sind.

2. Heizvorrichtung nach Anspruch 1, **dadurch gekennzeichnet, dass** die streckgerichteten Carbonfasern mit einer Schlichte behandelt werden.

3. Heizvorrichtung nach einem oder mehrerer der Ansprüche 1 bis 2, **dadurch gekennzeichnet, dass** die streckgerissenen Carbonfasergarne mit einem textilen Trägermaterial verbunden sind.

4. Heizvorrichtung nach einem oder mehrerer der Ansprüche 1 bis 3, **dadurch gekennzeichnet, dass** sie eine Steuerungs- und Regelungseinrichtung besitzt.

5. Heizeinrichtung nach einem oder mehrerer der Ansprüche 1 bis 4, **dadurch gekennzeichnet, dass** sie einen Temperatursensor besitzt.

6. Verwendung einer Heizvorrichtung gemäß einem oder mehrerer der Ansprüche 1 bis 5 für den Temperaturbereich von 20 bis 35°C als Sitzheizung für Fahrzeuge.

7. Verwendung nach einem oder mehrerer der Ansprüche 1 bis 5 als Sitzheizung für Kraftfahrzeuge.

8. Verwendung einer Heizvorrichtung gemäß einem der Ansprüche 1 bis 5 für den Temperaturbereich von 5 bis 45°C als medizinischen Verband.

9. Verwendung einer Heizvorrichtung gemäß einem der Ansprüche 1 bis 5 für den Temperaturbereich von 45 bis 400°C als Formenheizung für Polymer-Faser-Verbundbauteile.

## Claims

1. A heating device based on an electrically conductive, flexible resistance material made of carbon fibres arranged between at least two electrodes for electrical contacting, **characterized in that** the carbon fibres are stretch-broken fibre yarns with a titre of 30tex to 800tex and a specific electrical resistance of 100 to 600 Ω/m.

2. The heating device according to claim 1, **characterized in that** the stretch-broken carbon fibres are treated with a finish.

3. The heating device according to one or a plurality of claims 1 to 2, **characterized in that** the stretch-broken carbon fibre yarns are connected to a textile carrier material.

4. The heating device according to one or a plurality of the claims 1 to 3, **characterized in that** it has a control and regulating device.

5. The heating device according to one or a plurality of the claims 1 to 4, **characterized in that** it has a temperature sensor.

6. Use of a heating device according to one or a plurality of the claims 1 to 5 for the temperature range from 20 to 35°C as a seat heater for vehicles.

7. Use according to one or a plurality of the claims 1 to 5 as a seat heater for vehicles.

8. Use of a heating device according to one of the claims 1 to 5 for the temperature range from 5 to 45°C as a medical dressing.

9. Use of a heating device according to one of the claims 1 to 5 for the temperature range from 45 to 400 °C as mould heating for polymer fibre composite components.

## Revendications

1. Dispositif de chauffage sur la base d'un matériau de résistance électro-conducteur flexible en fibres de carbone disposé entre au moins deux électrodes pour la mise en contact électrique, **caractérisé en ce que** les fibres de carbone sont des fibres de carbone effilochées par étirage avec un titre allant de 30 tex à 800 tex et une résistance électrique spécifique de 100 à 600 Ω/m.

2. Dispositif de chauffage selon la revendication 1, **caractérisé en ce que** les fibres de carbone effilochées par étirage sont traitées avec un enduit.

3. Dispositif de chauffage selon l'une ou plusieurs des revendications 1 à 2, **caractérisé en ce que** les fils de fibres de carbone effilochées par étirage sont mis en liaison avec un matériau de support textile.

4. Dispositif de chauffage selon l'une ou plusieurs des revendications 1 à 3, **caractérisé en ce qu'**il possède un dispositif de commande et de réglage.

5. Dispositif de chauffage selon l'une ou plusieurs des revendications 1 à 4, **caractérisé en ce qu'**il possède un capteur de température.

6. Utilisation d'un dispositif de chauffage selon l'une ou plusieurs des revendications 1 à 5 pour la plage de températures de 20 à 35°C en tant que chauffage de siège pour véhicules automobiles.

7. Utilisation selon l'une ou plusieurs des revendications 1 à 5 en tant que chauffage de siège pour véhicules automobiles.

8. Utilisation d'un dispositif de chauffage selon l'une des revendications 1 à 5 pour la plage de températures allant de 5 à 45°C en tant que pansement médical.

9. Utilisation d'un dispositif de chauffage selon l'une des revendications 1 à 5 pour la plage de températures allant de 45 à 400°C en tant que chauffage de moules pour éléments composites à fibres polymères.
